# FASCICULE DE BREVET EUROPEEN

(11) **EP 2 427 680 B1**
(45) Date de publication et mention de la délivrance du brevet: **21.08.2013**
(21) Numéro de dépôt: 10727064.7
(22) Date de dépôt: 29.04.2010
(51) Int. Cl.: F16K 41/10

(54) **SOUPAPE À SOUFFLET ADAPTÉE POUR USAGE EN CRYOGÉNIE**
IN DER KRYOTECHNIK VERWENDETES BALGVENTIL
BELLOWS VALVE FOR USE IN CRYOGENICS

(30) Priorité: 05.05.2009 FR 0952977
(43) Date de publication de la demande: 14.03.2012
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); CHOMMY, Francine, F-94370 Sucy-en-Brie (FR); GARNIER, Emmanuel, F-75006 Paris (FR); GESBERT, Thierry, F-91370 Verrieres le Buisson (FR); HAIK-BERAUD, Natacha, F-94500 Champigny-sur-Marne (FR)
(74) Mandataire: Mercey, Fiona Susan
(86) Numéro de dépôt international: PCT/FR2010/050816
(87) Numéro de publication internationale: WO 2010/130912

(56) Documents cités:
- DE-A1- 2 414 763
- DE-U1- 9 111 172
- DE-U1-202008 016 113
- US-A- 2 693 822

## Description

La présente invention s'applique aux soupapes de sécurité à soufflet utilisées sur des fluides cryogéniques.

Une soupape à soufflet comprend un circuit de fluide véhiculé à l'intérieur d'un corps de soupape, un obturateur mobile entre une position de repos et une position active parmi une position d'ouverture et une position de fermeture dudit circuit et un système de soufflet annulaire élastique de liaison entre ledit obturateur et ledit corps, fermant de manière étanche ledit circuit.

Les soupapes à soufflet sont des organes de sécurité qui, par leur conception, permettent de s'accommoder de contre-pression importante à leur échappement. Pour cela il est impératif que le corps de la soupape, dit bonnet soit en équilibré en pression avec l'extérieur. La fonction d'équilibrage est assuré par l'évent du bonnet, et donc il est essentiel que cet évent ne soit pas obstrué, tel qu'indiqué dans la norme API 520.

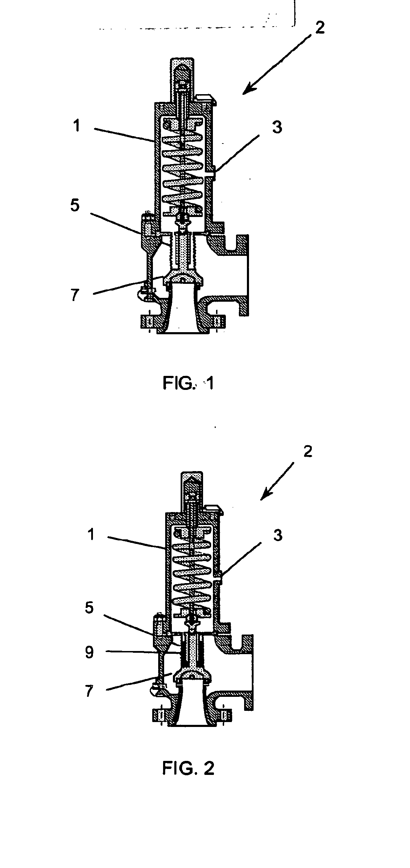

Du fait des contraintes citées ci-dessus, l'utilisation des soupapes de sécurité à soufflet en cryogénie n'est pas recommandée, voire parfois interdite du fait du risque de blocage de la soupape par la présence accidentelle de glace 9 dans le soufflet 5, (Figure 2), empêchant le mouvement vers le haut de l'obturateur ou clapet 7 (Figure 1) de la soupape 2. Le risque encouru en cas d'un tel incident peut aller jusqu'à la rupture d'un équipement causant des dégâts majeurs sur une unité, voire des fatalités.

La présence de glace 9 (Figure 2) dans le soufflet 5 résulte de la conjonction de deux événements : la présence d'eau, et une température basse dans le soufflet inférieur ou égale à 0°C.

La présence d'eau peut se produire par deux phénomènes :
- Condensation de l'humidité contenue dans l'air ambiant du fait de la respiration naturelle de la cavité constituée par le bonnet 1 de la soupape (Figure 1) via l'évent 3 présent, liée aux variations de température jour / nuit.
- Condensation de l'humidité contenue dans l'air ambiant du fait du cryopompage (capture de l'humidité sur une surface froide) qui se produit dans le cas où il existe une légère fuite sur la soupape, qui refroidit celle-ci en dessous de la température de condensation de l'air humide.

La température basse peut être liée à différentes causes :
- Température ambiante
- Fuite de la soupape (siége/clapet 7)
- Distance très courte entre le procédé et la soupape, celle-ci est refroidie par conduction ou convection

Afin de s'affranchir des problématiques citées ci-dessus, il est possible de faire appel à une autre technologie de soupapes, les soupapes pilotées, mais les coûts de celles-ci sont substantiellement plus élevés.

L'invention décrite ci-dessous permet à un coût très faible d'utiliser la technologie des soupapes à soufflet en cryogénie en faisant fi des inconvénients cités ci-dessus.

Tel que décrit ci-dessus c'est la conjonction de deux événements qui conduit à la dangerosité de l'utilisation des soupapes à soufflet en cryogénie :
- Présence d'eau
   et
- Température froide

La température étant un paramètre sur lequel on ne peut avoir que peu d'influence, la solution consiste à avoir en permanence une atmosphère dépourvue d'humidité dans la cavité constituée par le bonnet de la soupape (cavité qui est en contact via des orifices avec l'intérieur du soufflet).

DE-A-2414763 décrit une soupape selon le préambule de la revendication 1.

Selon un objet de l'invention, il est prévu une soupape du type comprenant un circuit de fluide véhiculé à l'intérieur d'un corps de soupape, un obturateur mobile entre une position de repos et une position active parmi une position d'ouverture et une position de fermeture dudit circuit et un système de soufflet annulaire élastique de liaison entre ledit obturateur et ledit corps fermant de manière étanche ledit circuit par rapport à une chambre, la chambre étant ouvert vers l'extérieur de la soupape à travers un évent formé dans le corps et l'évent étant muni de moyens empêchant l'entrée de gaz humide dans le corps caractérisée en ce que une tubulure est reliée à l'évent, cette tubulure étant reliée à une source de gaz sec pressurisé.

Selon un aspect de l'invention, il est prévu l'usage d'une soupape décrite ci-dessus à une température inférieure à 0°C, voire à -50°C.

Selon un autre aspect de l'invention, il est prévu un appareil de séparation de gaz par distillation à une température inférieure à 0°C dans une enceinte dont les parois sont balayées par un gaz sec, l'appareil comprenant une soupape telle que décrite ci-dessus, le fluide étant un gaz destiné à ou provenant de la distillation et la tubulure étant reliée à une paroi de l'enceinte de sorte que le gaz sec de balayage pénètre dans la tubulure.

L'appareil est éventuellement muni de moyens de détection de rupture de soufflet.

L'appareil peut être un appareil de séparation de gaz par distillation à une température inférieure à 0°C comprenant une soupape telle que décrite ci-dessus, le fluide étant un gaz destiné à ou provenant de la distillation.

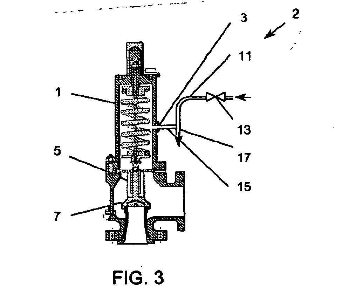

L'invention sera décrite en plus de détail en se référant à la Figure 3 qui illustre une soupape selon l'invention avec balayage par un gaz sec.

Pour cette figure, la structure de base de la soupape à soufflet, illustrée dans la Figure 1, est conservée. Dans la Figure 3, une simple tubulure 15 est connectée sur l'évent 3 du bonnet 1 de la soupape 2, sur laquelle est raccordé un balayage permanent de gaz sec (air instrument, azote de service, ....) passant par les tubulures 11,17. Ceci crée ainsi un barrage à l'air ambiant qui pourrait s'introduire dans la cavité constituée par le bonnet de la soupape. Le débit de gaz de balayage est commandé par une vanne 13.

## Revendications

1. Soupape du type comprenant un circuit de fluide véhiculé à l'intérieur d'un corps de soupape (1), un obturateur (7) mobile entre une position de repos et une position active parmi une position d'ouverture et une position de fermeture dudit circuit et un système de soufflet (5) annulaire élastique de liaison entre ledit obturateur (7) et ledit corps (1) fermant de manière étanche ledit circuit par rapport à une chambre la chambre étant ouverte vers l'extérieur de la soupape à travers un évent (3) formé dans le corps (1) et l'évent étant muni de moyens empêchant l'entrée de gaz humide dans le corps, **caractérisée en ce qu'**elle comprend une tubulure reliée à l'évent (3), cette tubulure (15) étant reliée à une source de gaz sec pressurisé.

2. Usage d'une soupape décrite dans la revendication 1 à une température inférieure à 0°C.

3. Usage d'une soupape selon la revendication 2 à une température inférieure à -50°C.

4. Appareil de séparation de gaz par distillation à une température inférieure à 0°C dans une enceinte (31) dont les parois sont balayées par un gaz sec, l'appareil comprenant une soupape selon la revendication 1, le fluide étant un gaz destiné à ou provenant de la distillation et la tubulure étant reliée à une paroi de l'enceinte de sorte que le gaz sec de balayage pénètre dans la tubulure.

5. Appareil selon la revendication 4 munie de moyens de détection de rupture de soufflet.

6. Appareil de séparation de gaz par distillation à une température inférieure à 0°C comprenant une soupape selon la revendication 1, le fluide étant un gaz destiné à ou provenant de la distillation.

## Patentansprüche

1. Ventil des Typs umfassend einen Kreislauf für ein Fluid, das im Inneren eines Ventilkörpers (1) transportiert wird, ein Schließglied (7), das zwischen einer Ruhestellung und einer aktiven Stellung zwischen einer Öffnungsstellung und einer Schließstellung des Kreislaufs beweglich ist, und ein elastisches ringförmiges Balgsystem (5) zur Verbindung zwischen dem Schließglied (7) und dem Körper (1), das auf dichte Weise den Kreislauf in Bezug auf eine Kammer schließt, wobei die Kammer nach außerhalb des Ventils über ein Luftloch (3), das in dem Körper (1) gebildet ist, geöffnet ist und wobei das Luftloch mit Mitteln versehen ist, die den Eintritt von feuchtem Gas in den Körper verhindern, **dadurch gekennzeichnet, dass** es einen Rohrstutzen umfasst, der mit dem Luftloch (3) verbunden ist, wobei dieser Rohrstutzen (15) mit einer Trockendruckgas-Quelle verbunden ist.

2. Verwendung eines in Anspruch 1 beschriebenen Ventils bei einer Temperatur, die weniger als 0 °C beträgt.

3. Verwendung eines in Anspruch 2 beschriebenen Ventils bei einer Temperatur, die weniger als -50 °C beträgt.

4. Vorrichtung zur Trennung von Gas durch Destillation bei einer Temperatur, die weniger als 0 °C beträgt, in einem Raum (31), dessen Wände durch ein Trockengas gespült werden, wobei die Vorrichtung ein Ventil nach Anspruch 1 umfasst, wobei das Fluid ein Gas ist, das für die Destillation bestimmt ist oder aus der Destillation kommt, und wobei der Rohrstutzen mit einer Wand des Raums verbunden ist, so dass das Spültrockengas in den Rohrstutzen eindringt.

5. Vorrichtung nach Anspruch 4, die mit Mitteln zum Erkennen eines Balgbruchs versehen ist.

6. Vorrichtung zur Trennung von Gas durch Destillation bei einer Temperatur, die weniger als 0 °C beträgt, umfassend ein Ventil nach Anspruch 1, wobei das Fluid ein Gas ist, das für die Destillation bestimmt ist oder aus der Destillation kommt.

## Claims

1. Valve of the type comprising a circuit for fluid conveyed inside a valve body (1), a sealing member (7) that can move between a rest position and an active position, between an open position and a closed position of said circuit, and a resilient annular bellows system (5) for connecting said sealing member (7) and said body (1) which seals off said circuit relative to a chamber, the chamber being open to the outside of the valve through a vent (3) formed in the body (1), and the vent being provided with means preventing the ingress of wet gas into the body, **characterised in that** said valve comprises a connection piece connected to the vent (3), this connection piece (15) being connected to a source of pressurised dry gas.

2. Use of a valve according to claim 1 at a temperature below 0 °C.

3. Use of a valve according to claim 2 at temperature below -50 °C.

4. Apparatus for separating gas by distillation at a temperature below 0 °C in an enclosure (31), the walls of which are scavenged by a dry gas, the apparatus comprising a valve according to claim 1, the fluid being a gas intended for or coming from the distillation and the connection piece being connected to a wall of the enclosure such that the dry scavenging gas penetrates the connection piece.

5. Apparatus according to claim 4, provided with bellows rupture detection means.

6. Apparatus for separating gas by distillation at a temperature below 0 °C comprising a valve according to claim 1, the fluid being a gas intended for or coming from the distillation.
